Europäisches Patentamt

European Patent Office

Office européen des brevets

(19)

(11) Publication number: **0 244 518**
**B1**

# (12) EUROPEAN PATENT SPECIFICATION

(45) Date of publication of the patent specification:
05.12.90

(51) Int. Cl.⁵: **G01N 19/04**

(21) Application number: 86303425.2

(22) Date of filing: 06.05.86

(54) Apparatus and method for adhesion testing of coatings.

(43) Date of publication of application:
11.11.87 Bulletin 87/46

(45) Publication of the grant of the patent:
05.12.90 Bulletin 90/49

(84) Designated Contracting States:
DE FR IT SE

(56) References cited:
FR-A- 2 542 088
GB-A- 1 557 456
US-A- 3 628 378
US-A- 3 821 892
US-A- 4 586 371

SOVIET INVENTIONS ILLUSTRATED, Week E45, 22nd
December 1982, abstract no. P8176E45, Derwent
Publications, London, GB; & SU-A-896 517 (A.M.
BRUK) 10-01-1982

(73) Proprietor: Conoco Inc., 1000 South Pine Street P.O.
Box 1267, Ponca City Oklahoma 74603(US)

(72) Inventor: Ivie, Randall G., 106 Ranch drive, Ponca City,
OK 74601(US)
Inventor: Thomason, William H., 2401 Meadowbrook,
Ponca City, OK 74603(US)

(74) Representative: Leale, Robin George et al, FRANK B.
DEHN & CO. Imperial House 15-19 Kingsway, London
WC2B 6UZ(GB)

## Description

This invention relates to the art of materials testing and, more particularly, to an improved apparatus for the testing of coating adhesion to a substrate.

For many applications, the adhesion of an exterior coating to a substrate is extremely critical. Whether the coating is for electrochemical protection such as an anodic coating of flame sprayed aluminum on a steel offshore structure or for providing passive protection such as a paint coating acting as a barrier against a corrosive environment, it is critical that the adhesion of the coating to the substrate be within well defined limits, depending on the application, in order to provide the requisite protection desired of the coating. Any protective advantage afforded by a coating is quickly lost when the coating separates from the substrate.

In order that the tests be reliably reproducible, it is essential that an adhesion tester apply purely tensile forces to the coating which are in a direction perpendicular to the coated surface. Any nonperpendicularly-directed forces can result in tearing of the coating and an inaccurate adhesion test reading.

U.S. Patent Number 3,821,892 describes an apparatus for testing intercoat adhesion. A dolly is bonded to the test material and a tractive force is applied to the dolly which is located between a two-legged support, the legs bearing against the coated surface. While this apparatus is adequate for testing coatings on a completely flat surface, any localized irregularities within the span of the legs or any curvature in the part being tested can cause a coating to tear. U.S. Patent Numbers 3,628,378 and 3,577,775 disclose apparatus of similar operation.

UK Patent Number 1, 557, 456 describes apparatus of similar operation and having similar disadvantages, in which the dolly is surrounded by an annular support which bears against the coated surface.

It is therefore an objection of this invention to provide a coating adhesion testing method and apparatus for measuring and testing the adhesive bond strength of a coating to a substrate in a tensile mode, the tension force being applied perpendicularly to the coating surface.

It is also an object, at least in a preferred embodiment, to provide an easily portable apparatus for the testing of coating adhesion to a substrate, which may advantageously be easily adapted for use on a multiplicity of shaped structures.

In accordance with one aspect the present invention provides an apparatus for measuring and/or testing the adhesive bonding strength of a coating to a substrate in a tensile mode comprising a dolly, said dolly having a bonding surface conforming to a surface of said coating;
bonding means for adhering said dolly bonding surface to said coating surface, said bonding means having an adhesive bond strength in excess of the strength of said adhesive bond between said coating and said substrate;
ram means adapted for engagement against a portion of said coating surface and piston means attached to one of said ram means and said dolly and cylinder means attached to the other of said ram means and said dolly for forcing said ram means into pressure engagement with said coating surface and for placing said dolly, said bonding means and said coating in tension; characterised in that said dolly has an opening passing therethrough, said opening being centred with respect to a central axis of said dolly and passing through said bonding surface of said dolly, said ram means comprising a ram passing through said axially centred opening in said dolly and being adapted for engagement against a centred portion of said coating surface bonded to said dolly, said piston means and cylinder means acting in use to place said dolly, said bonding means and said coating in tension in a direction which is normal to the surface of the coating at the point of engagement thereof by the ram.

Preferably in accordance with the invention, the aforementioned piston and cylinder means are hydraulically pressurized.

In accordance with another aspect of the invention there is provided a method of measuring and/or testing the adhesive bond of a coating to a substrate in a tensile mode, comprising the steps of providing a dolly;
bonding the dolly to the coating with bonding means having a bond strength in excess of the adhesive bond between the coating and the substrate; attaching piston and cylinder means to the dolly, the piston and cylinder means including ram means; applying pressure to the piston and cylinder means to force the ram means into pressure engagement with the coating; increasing the pressure to a point at which the coating separates from the substrate and monitoring the pressure throughout the step of increasing the pressure; characterised in that the method includes a step of cutting the coating circumferentially around the dolly and in that said dolly has a generally axially centred opening therethrough, said ram means comprising a generally axially centred ram passing through the generally axially centred opening of the dolly.

The present invention may thus provide an apparatus and method for tensile adhesion testing of a coating to a substrate in which a force perpendicular to the tested material can be applied regardless of orientation, curvature or irregularities of the surface of the tested object.

Certain embodiments of the invention will now be described, by way of example only, with reference to the accompanying drawings wherein:

Figure 1 is a schematic, cross-sectional view of an adhesion tester in accordance with the present invention;

Figure 2 is a perspective view of a dolly used in a preferred form of the apparatus, and

Figure 3 shows an alternative form of dolly in the testing mode in accordance with the present invention.

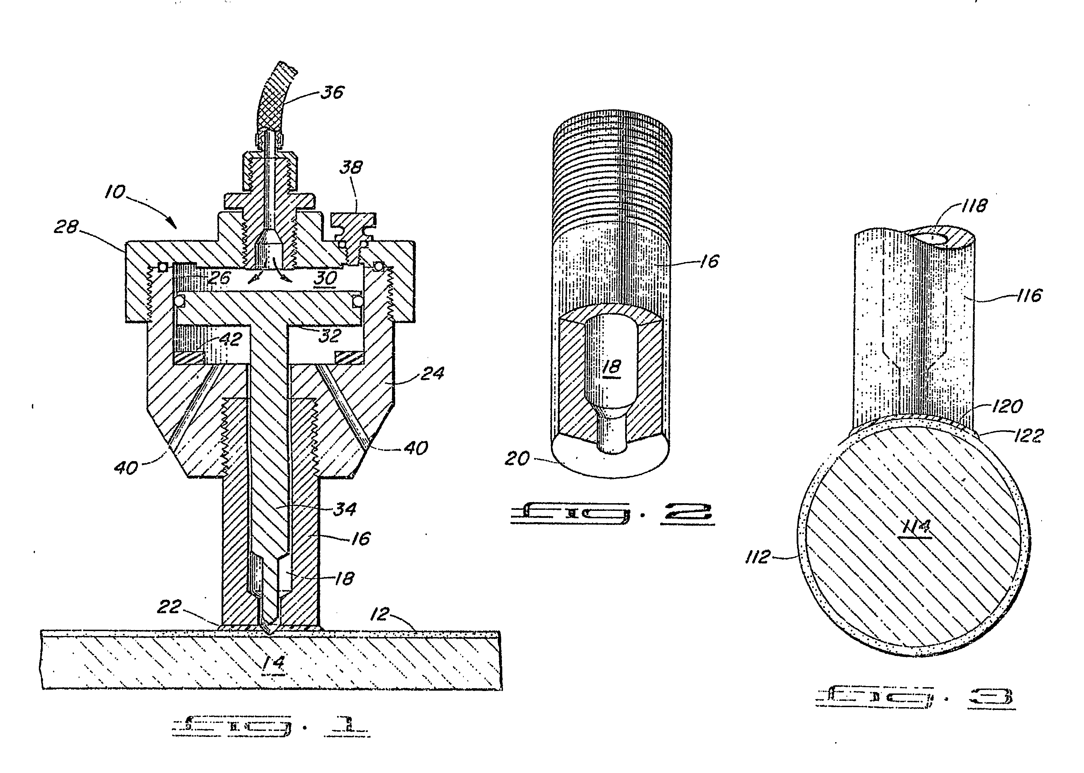

Referring now to the drawings, Figure 1 shows an adhesion tester 10 in position for testing the adhesive bond between a coating 12 and a substrate 14.

It will be understood that the coating 12 may be any type of coating such as a paint, a plastic laminate, or a metal coating applied by any of several processes such as flame spraying, electroplating, and the like. Similarly, the substrate 14 may be wood, a polymeric material, or metal. For purposes of illustrating a preferred embodiment, the coating 12 comprises a flame sprayed aluminum coating on a substrate 14 of steel.

As shown in the drawings, a dolly 16 having an axially centered bore 18 and a bonding face 20 (Fig. 2) is provided. The dolly 16 is bonded on its bonding face 20 to the coating 12 with bonding means such as a layer of cured epoxy or cyanoacrylate resin 22 extending between the surface of the coating 12 and the bonding face 20 of the dolly 16. Although the bonding means 22 is preferred to be an epoxy or cyanoacrylate for metal-on-metal coatings, any type of adhesive material may be used, the criteria for selection of a bonding means being that the adhesive strength of the bonding means 22 between both the coating 12 and the bonding face 20 of the dolly 16 exceeds the adhesive bond strength of the coating 12 to the substrate 14. As shown in the figures, the dolly is preferably cylindrical in form. It will be understood, however, that practice may dictate other forms which may be used so long as the bore 18 is generally axially centered in the dolly.

After the dolly 16 has been securely bonded to the coating 12, the dolly is attached to the tester assembly 24. A portion of the tester assembly 24 includes a cylindrical inner surface 26 and a cap 28 defining a piston chamber 30. A piston 32 is disposed within the piston chamber 30 and has an axially centered ram 34 attached thereto and extending outwardly of the tester assembly 24 through the axially centered opening 18 of the dolly 16 when mounted on the dolly. In order to separate the tested portion of the coating located immediately under the bonding face 20 of the dolly 16 from the remainder of the coating which could affect the tensional force required to pull the tested portion of the coating away from the substrate, the coating 12 is scored or cut around the outer circumference of the dolly 16. Any type of cutting means may be used for this purpose. This leaves the dolly 16 attached to a ring of coating of a known area suitable for quantative testing. Because of the pointed style of the ram 34, it is unnecessary to cut the inner circumference of the bore 18 of the dolly 16 in order to define the coating test area.

Pressurized fluid is admitted to the piston chamber 30 through a conduit 36 which is attached to some type of fluid pressurizing means (not shown) such as a hydraulic pump, an air pump, a pressurized fluid reservoir or the like. Various other features may be provided in the tester assembly 24 such as a bleed-off valve 38 for relieving pressure within the piston chamber 30 as well as various vent passages 40 for relieving pressure within the cylinder 26 on the side of the piston 32 opposite the piston chamber 30. Bump stops 42 may also be provided to limit the travel of the piston 32 and the ram 34.

In operation of the testing apparatus to test the tensile bond strength of the coating 12 through the substrate 14, pressurized fluid is admitted to the piston chamber 30 and the pressure is monitored by any common means. The pressure within the piston chamber 30 drives the piston 32 and its attached ram 34 into engagement with the surface of the coating 12. An increase in fluid pressure thus causes a tensional force to be developed in the dolly and, thereby, in the bonding means 22 and in the coating 12 as well. Because of the axially centered configuration of the ram 34 within the dolly 16, such tensional forces are consistantly applied perpendicular to the surface of the coating 12. At the point at which the tension forces in the dolly 16 the bonding means 22 and the coating 12 cause separation of the coating 12 from the substrate 14, the pressure monitored within the piston chamber 30 can be used to calculate the adhesive bond strength of the coating 12 to the substrate 14 which caused it to fail.

Figure 3 illustrates an alternative form of dolly 116 which has a bonding face 120 which is curved to conform to the shape of the surface of a cylindrical member rather than a planar member as shown in the previous figures. The dolly 116 is bonded to the surface of a coating 112 on a substrate 114 utilizing bonding means 122 which may be any type as previously described with respect to the earlier figures. The dolly 116 has an axially centered bore 118 shown in phantom for accepting the ram 34 of the tester assembly 24 as previously described. It can be clearly seen that the axially centered nature of the ram 34 within the central bore 118 of the dolly 116 will cause the development of a perpendicular tensional force to test the adhesion of the coating 112 to the substrate 114.

EXAMPLE

The apparatus shown in Figures 1 and 2 was utilized to test the coating adhesion of a flame sprayed aluminum coating applied to a steel substrate. The dolly face had a surface area of 4.8 cm² (0,75 inch). The dolly was bonded to the surface of the flame sprayed aluminum coating using a cyanoacrylate adhesive designated CA-5 sold by 3M Company. The bond was allowed to cure for 24 hours although 80% of the bond strength may be reached after 1 to 2 hours. The CA-5 adhesive is rated at a tensile strength of up to 350 kg/cm$^{-2}$ (5,000 psi). After cutting of the coating to conform with the bonding face of the dolly, the coating testing apparatus was attached to the dolly and the pressure in the piston chamber was increased until a gauge pressure of 27 kg/cm$^{-2}$ (380 psi) was noted at which point the bond between the coating and the substrate failed. Based on the size of the piston and surface area of the dolly, the calculated tensile loading and thus the coating adhesion strength at failure was 99.91 kg/cm$^{-2}$ (1,421 psi).

**Claims**

1. An apparatus (10) for measuring and/or testing the adhesive bonding strength of a coating (12,112) to a substrate (14,114) in a tensile mode comprising a dolly (16,116), said dolly having a bonding surface conforming to a surface of said coating: bonding means (22,122) for adhering said dolly bonding surface (20,120) to said coating surface, said bonding means having an adhesive bond strength in excess of the strength of said adhesive bond between said coating and said substrate; ram means (34) adapted for engagement against a portion of said coating surface and piston means (32) attached to one of said ram means and said dolly and cylinder means (30) attached to the other of said ram means and said dolly for forcing said ram means into pressure engagement with said coating surface and for placing said dolly, said bonding means and said coating in tension; characterised in that said dolly (16, 116) has an opening (18,118) passing therethrough, said opening being centred with respect to a central axis of said dolly and passing through said bonding surface (20,120) of said dolly, said ram means (34) comprising a ram passing through said axially centred opening in said dolly and being adapted for engagement against a centred portion of said coating surface (12,112) bonded to said dolly, said piston means (32) and cylinder means (30) acting in use to place said dolly, said bonding means and said coating in tension in a direction which is normal to the surface of the coating at the point of engagement thereof by the ram.

2. The apparatus (10) as set forth in Claim 1 wherein said dolly (16,116) is cylindrical in form.

3. The apparatus (10) as set forth in Claim 1 or 2 further including a gauge for measuring pressure between said piston means (32) and said cylinder means (30).

4. The apparatus (10) as set forth in any preceding claim further including means for providing hydraulic pressure to said piston and cylinder means (30,32).

5. The apparatus (10) as set forth in any of claims 1 to 3 further including gas compressor means for providing compressed gas to said piston and cylinder means (30,32).

6. The apparatus (10) as set forth in any preceding claim wherein said bonding means (22,122) is an epoxy resin.

7. The apparatus (10) as set forth in any of claims 1 to 5 wherein said bonding means (22, 122) is a cyanoacrylate resin.

8. The apparatus (10) as set forth in any preceding claim wherein said bonding surface (20) of said dolly (16) is planar in form.

9. The apparatus (10) as set forth in any of claims 1 to 7 wherein said bonding surface (120) of said dolly (116) is curved to conform with a curvature of a cylindrical-shaped substrate having said coating thereon.

10. A method of measuring and/or testing the adhesive bond of a coating to a substrate in a tensile mode, comprising the steps of providing a dolly; bonding the dolly to the coating with bonding means having a bond strength in excess of the adhesive bond between the coating and the substrate; attaching piston and cylinder means to the dolly, the piston and cylinder means including ram means; applying pressure to the piston and cylinder means to force the ram means into pressure engagement with the coating; increasing the pressure to a point at which the coating separates from the substrate and monitoring the pressure throughout the step of increasing the pressure; characterised in that the method includes a step of cutting the coating circumferentially around the dolly and in that said dolly has a generally axially centred opening therethrough, said ram means comprising a generally axially centred ram passing through the generally axially centred opening of the dolly.

**Patentansprüche**

1. Vorrichtung (10) zur Messung und/oder Prüfung der Haftfestigkeitsstärke einer Beschichtung (12, 112) an einem Substrat (14, 114) mit einer Zugmethode, umfassend einen Halter (16, 116), wobei der Halter eine an die Oberfläche der Beschichtung angepasste Haftoberfläche hat; Haftmittel (22, 122) zum Anheften der Haftoberfläche (20, 120) des Halters an die Beschichtungsoberfläche, wobei die Haftmittel eine die Haftfestigkeitsstärke zwischen der Beschichtung und dem Substrat übersteigende Haftfestigkeitsstärke haben; Stößelmittel (34) zum Eingriff gegen einen Abschnitt der Beschichtungsoberfläche angepaßt und Kolbenmittel (32) an einem der Stößelmittel befestigt sind, und die Halter- und Zylindermittel (30) an dem anderen der Stößelmittel und dem Halter zum Stoßen der Stößelmittel in Preßeingriff mit der Beschichtungsoberfläche und zum Plazieren des Halters befestigt sind, wobei die Haftmittel und die Beschichtung unter Spannung stehen, dadurch gekennzeichnet, daß der Halter (16, 116) eine dadurch verlaufende Öffnung (18, 118) hat, die Öffnung im Verhältnis zu einer zentralen Achse des Halters zentriert ist und durch die Haftoberfläche (20, 120) des Halters verläuft, die Stößelmittel (34) einen Stößel umfassen, der durch die axial zentrierte Öffnung in dem Halter verläuft und zum Eingriff gegen einen zentralen Abschnitt der an dem Halter haftenden Beschichtungsoberfläche (12, 112) angepaßt ist, Kolbenmittel (32) und Zylindermittel (30) zum Zweck wirken, um den Halter zu plazieren, und die Haftmittel und die Beschichtung in einer Richtung unter Spannung stehen, welche normal zu der Oberfläche der Beschichtung an deren Eingriffspunkt durch den Stößel ist.

2. Vorrichtung (10) nach Anspruch 1, bei dem der Halter (16, 116) eine zylindrische Form aufweist.

3. Vorrichtung (10) nach Anspruch 1 oder 2 weiterhin eine Meßeinrichtung zum Messen des Drucks zwischen den Kolbenmitteln (32) und den Zylindermitteln (30) umfaßt.

4. Vorrichtung (10) nach einem der vorhergehenden Ansprüche, die weiterhin Mittel zum Liefern von hydraulischem Druck an die Kolben- und Zylindermittel (30, 32) umfaßt.

5. Vorrichtung (10) nach einem der Ansprüche 1 bis 3, die weiterhin Gaskompressormittel zum Liefern von komprimiertem Gas an die Kolben- und Zylindermittel (30, 32) umfaßt.

6. Vorrichtung (10) nach einem der vorhergehenden Ansprüche, bei dem das Haftmittel (22, 122) ein Epoxyharz ist.

7. Vorrichtung (10) nach einem der Ansprüche 1 bis 5, bei dem das Haftmittel (22, 122) ein Cyanoacrylatharz ist.

8. Vorrichtung (10) nach einem der vorhergehenden Ansprüche, bei dem die Haftoberfläche (20) des Halters (16) eine ebene Form hat.

9. Vorrichtung (10) nach einem der Ansprüche 1 bis 7, bei dem die Haftoberfläche (120) des Halters (116) gekrümmt ist, um mit einer Krümmung eines zylinderförmigen Substrats übereinzustimmen, das darauf die Beschichtung hat.

10. Verfahren zur Messung und/oder Prüfung der Haftfestigkeit einer Beschichtung an einem Substrat in einer Zugmethode, die Schritte umfassend einen Halter bereitzustellen; Ankleben des Halters an die Beschichtung mit Haftmitteln, deren Haftstärke die Haftfestigkeit zwischen der Beschichtung und dem Substrat übersteigt; Anbringen von Kolben- und Zylindermitteln an dem Halter, wobei die Kolben- und Zylindermittel Stößelmittel umfassen; Anlegen von Druck an die Kolben- und Zylindermittel zum Drücken der Stößelmittel in Preßeingriff mit der Beschichtung; Erhöhen des Druckes auf einen Punkt, an dem sich die Beschichtung von dem Substrat löst und Überwachen des Druckes während des Schrittes der Druckerhöhung; dadurch gekennzeichnet, dass das Verfahren einen Schritt umfaßt, die Beschichtung um den Halter herum zu schneiden und dass der Halter eine im wesentlichen axial zentrierte Öffnung dadurch hat, und die Stößelmittel einen im wesentlichen axial zentrierten Stößel umfassen, der durch die im wesentlichen axial zentrierte Öffnung des Halters verläuft.

## Revendications

1. Appareil (10) de mesure et/ou d'essai de la résistance de liaison adhésive d'un revêtement (12, 112) sur un substrat (14, 114) en mode de traction, comprenant une tubulure (16, 116) qui a une surface de collage correspondant à une surface du revêtement ; des moyens de collage (22, 122) destinés à faire adhérer la surface de collage (20, 120) de la tubulure à la surface du revêtement, les moyens de collage ayant une résistance de liaison adhésive supérieure à la résistance de liaison adhésive existant entre le revêtement et le substrat ; des moyens formant poussoir (34) adaptés pour venir au contact d'une partie de la surface du revêtement et des moyens formant piston (32) fixés aux moyens formant poussoir ou à la tubulure et des moyens formant cylindre (30) fixés à la tubulure ou aux moyens formant poussoir respectivement, de manière que les moyens formant poussoir soient repoussés sous pression au contact de la surface de revêtement et que la tubulure, les moyens de collage et le revêtement soient soumis à des forces de traction ; caractérisé en ce que la tubulure (16, 116) a une ouverture (18, 118) qui la traverse, l'ouverture étant centrée sur l'axe central de la tubulure et traversant la surface de collage (20, 120) de la tubulure, les moyens formant poussoir (34) comprenant un poussoir passant dans l'ouverture centrée axialement formée dans la tubulure et étant adaptés pour venir au contact d'une partie centrée de la surface de revêtement (12, 112) collée à la tubulure, les moyens formant piston (32) et les moyens formant cylindre (30) mettant, pendant l'utilisation, la tubulure, les moyens de collage et le revêtement sous l'action de forces de traction, dans une direction perpendiculaire à la surface du revêtement à l'emplacement de contact du poussoir.

2. Appareil (10) selon la revendication 1, dans lequel la tubulure (16, 116) a une forme cylindrique.

3. Appareil (10) selon la revendication 1 ou 2, comprenant en outre un manomètre de mesure de la pression régnant entre les moyens formant piston (32) et les moyens formant cylindre (30).

4. Appareil (10) selon l'une quelconque des revendications précédentes, comprenant en outre des moyens d'application d'une pression hydraulique aux vérins formant piston et cylindre (30, 32).

5. Appareil (10) selon l'une quelconque des revendications 1 à 3, comprenant en outre un compresseur de gaz destiné à transmettre un gaz comprimé aux moyens formant piston et cylindre (30, 32).

6. Appareil (10) selon l'une quelconque des revendications précédentes, dans lequel les moyens de collage (22, 112) sont une résine époxyde.

7. Appareil (10) selon l'une quelconque des revendications 1 à 5, dans lequel les moyens de collage (22, 122) sont une résine de cyanoacrylate.

8. Appareil (10) selon l'une quelconque des revendications précédentes, dans lequel la surface de collage (20) de la tubulure (16) a une forme plane.

9. Appareil (10) selon l'une quelconque des revendications 1 à 7, dans lequel la surface de collage (120) de la tubulure (116) est courbe afin qu'elle corresponde à la courbure d'un substrat de forme cylindrique portant le revêtement.

10. Procédé de mesure et/ou d'essai de la liaison adhésive d'un revêtement à un substrat en mode de traction, comprenant les étapes suivantes : l'utilisation d'une tubulure ; le collage de la tubulure au revêtement par des moyens de collage ayant une résistance de liaison qui dépasse la résistance adhésive entre le revêtement et le substrat ; la fixation d'un vérin à la tubulure, le vérin comprenant des moyens formant poussoir ; l'application d'une pression au vérin de manière que les moyens formant poussoir soient repoussés au contact du revêtement avec application d'une pression ; l'augmentation de la pression jusqu'à ce que le revêtement se sépare du substrat et le contrôle de la pression pendant toute l'étape d'augmentation de la pression ; caractérisé en ce que le procédé comprend une étape de découpe du revêtement circonférentiellement autour de la tubulure, et en ce que la tubulure a une ouverture centrée axialement de façon générale et la traversant, les moyens formant poussoir comprenant un poussoir centré axialement de façon générale et passant dans l'ouverture centrée axialement de la tubulure.

FIG. 1

FIG. 2

FIG. 3

EP 0 244 518 B1